# EUROPEAN PATENT SPECIFICATION

(11) **EP 4 089 155 B1**
(45) Date of publication and mention of the grant of the patent: **27.12.2023**
(21) Application number: 22172922.1
(22) Date of filing: 12.05.2022
(51) Int. Cl.: C08K 3/04, C08K 3/06, C08K 5/14, C08K 5/20, C09K 3/10

(54) **SEAL**
DICHTUNG
JOINT

(30) Priority: 13.05.2021 JP 2021081776
(43) Date of publication of application: 16.11.2022
(73) Proprietor: Mitsubishi Cable Industries, Ltd., Chiyoda-ku Tokyo 100-8303 (JP)
(72) Inventor: HIRANO, Kosei, Arida-shi, Wakayama, 649-0304 (JP); IKEHARA, Junichiro, Amagasaki-shi, Hyogo, 660-0856 (JP); MAKINO, Daisuke, Arida-shi, Wakayama, 649-0304 (JP); FUKAZAWA, Shinpei, Arida-shi, Wakayama, 649-0304 (JP); INAGAKI, Tomoya, Arida-shi, Wakayama, 649-0304 (JP)
(74) Representative: Germain Maureau

(56) References cited:
- EP-A1- 3 378 894
- WO-A1-2020/261874
- JP-A- 2015 063 634

## Description

### BACKGROUND

Hydrogenated nitrile-butadiene rubber is known to be used as a material for forming seals. For example, JP 2015-63634 A1 discloses a rubber composition forming a seal, and the rubber composition contains carboxyl group-containing hydrogenated nitrile-butadiene rubber, hydrogenated nitrile-butadiene rubber, and polyamide resin. Further, rubber compositions forming a seal are disclosed in EP 3 378 894 A1.

### SUMMARY

The present invention is directed to a seal having a ring shape and made of a rubber composition. The rubber composition contains: a rubber component containing a hydrogenated nitrile-butadiene rubber as a main part; a fatty acid amide; and carbon black having an average particle diameter of 60 nm or less. The rubber component is crosslinked by using an organic peroxide, a co-crosslinking agent, and sulfur, said sulfur being present in 0.1 parts to 1 part by mass relative to 100 parts of said rubber component.

### BRIEF DESCRIPTION OF THE DRAWINGS

FIG. 1 is a cross-sectional view illustrating a structure in which a seal according to an embodiment is attached.
FIG. 2 is a diagram for explaining a test method of wear resistance.

### DETAILED DESCRIPTION

An embodiment will be described in detail below.

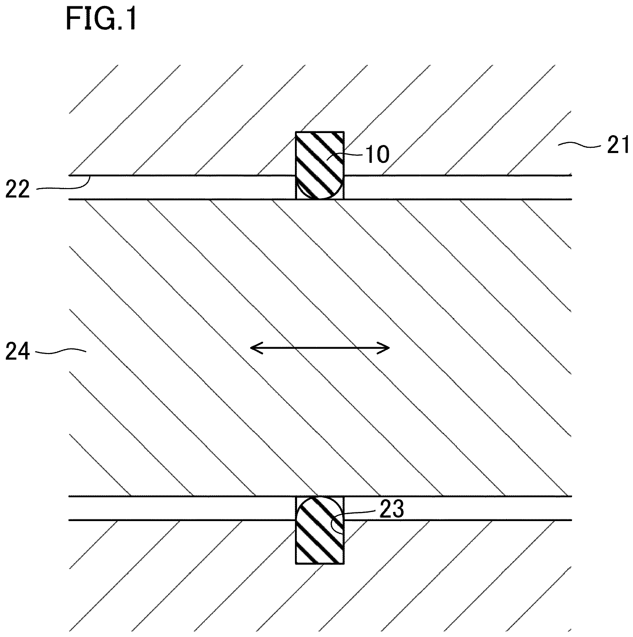

FIG. 1 illustrates a structure in which a seal 10 according to an embodiment is attached. The seal 10 is a so-called O-ring, which is fitted in a seal receiving groove 23 formed in the inner circumference surface of a cylindrical hole 22 in a housing 21, and allows an insertable member 24, which is movable in an axial direction, to pass through the seal 10 while sliding on the inner periphery of the seal 10. Specifically, for example, the seal 10 is used for a solenoid valve, fitted in an inner circumferential groove (seal receiving groove 23) of a spool insertion hole (cylindrical hole 22) formed in a valve body (housing 21) of the solenoid valve, and allows a spool (insertable member 24) to pass through the seal 10; thus, the seal 10 serves as a pneumatic packing disposed between the valve body and the spool.

The seal 10 of the embodiment is made of a rubber composition X containing: a rubber component containing hydrogenated nitrile-butadiene rubber (hereinafter referred to as "HNBR") as a main part; a fatty acid amide A; and carbon black B having an average particle diameter of 60 nm or less, and the rubber component is crosslinked by using an organic peroxide P, a co-crosslinking agent Q, and sulfur R.

The seal 10 of the embodiment provides suitable sliding characteristics on the inner periphery of the seal 10 because the rubber composition X forming the seal 10 contains the rubber component containing the HNBR as a main part, the fatty acid amide A, and the carbon black B, and because the rubber component is crosslinked by using the organic peroxide P, the co-crosslinking agent Q, and the sulfur R.

The content of the HNBR in the rubber component is more than 50% by mass, and is suitably 80% by mass or more, more suitably 90% by mass or more, and even more suitably 100% by mass, in order to obtain suitable sliding characteristics of the inner periphery. In addition to the HNBR, the rubber component may include, for example, nitrile rubber, silicone rubber, fluororubber, EPDM, etc.

In order to obtain suitable sliding characteristics of the inner periphery, the amount of bonded acrylonitrile of the HNBR is suitably 18% by mass or more to 52% by mass or less, more suitably 30% by mass or more to 40% by mass or less, and even more suitably 35% by mass or more to 37% by mass or less. From a similar point of view, the iodine value of the HNBR is suitably 8 mg/100 mg or more to 28 mg/100 mg or less, and more suitably 10 mg/100 mg or more to 15 mg/100 mg or less.

Examples of the fatty acid amide A include, for example, erucamide, oleamide, stearamide, behenamide, N-Oleylpalmitamide, N-Stearylerucamide, ethylenebis(stearamide), methylenebis(stearamide), etc. The fatty acid amide A suitably includes one kind or two or more kinds of these substances, and suitably includes an unsaturated fatty acid amide, more suitably includes an ω-9 fatty acid amide, and even more suitably includes erucamide in order to obtain suitable sliding characteristics of the inner periphery. From a similar point of view, the melting point of the fatty acid amide A is suitably 70°C or more to 90°C or less, and more suitably 75°C or more to 85°C or less.

The content a of the fatty acid amide A in the rubber composition X is suitably 1 part by mass or more to 20 parts by mass or less, and more suitably 2 parts by mass or more to 6 parts by mass or less, relative to 100 parts by mass of the rubber component, in order to obtain suitable sliding characteristics of the inner periphery.

Examples of the carbon black B include, for example, FEF, SAF, N234, ISAF, N339, N351, HAF, MAF, etc. The carbon black B suitably includes one kind or two or more kinds of these substances, and more suitably includes FEF in order to obtain suitable sliding characteristics of the inner periphery.

The average particle diameter of the carbon black B is 60 nm or less, but is suitably 20 nm or more to 60 nm or less, more suitably 20 nm or more to 55 nm or less, even more suitably 25 nm or more to 50 nm or less, and much more suitably 40 nm or more to 45 nm or less in order to obtain suitable sliding characteristics of the inner periphery. The average particle size of the carbon black B is the arithmetic average particle diameter.

The content b of the carbon black B in the rubber composition X is suitably 10 parts by mass or more to 80 parts by mass or less, more suitably 35 parts by mass or more to 60 parts by mass or less, and even more suitably 50 parts by mass or more to 58 parts by mass or less, relative to 100 parts by mass of the rubber component, in order to obtain suitable sliding characteristics of the inner periphery. From a similar point of view, the ratio (b/a) of the content b of the carbon black B to the content a of the fatty acid amide A in the rubber composition X is suitably 5 or more to 20 or less, more suitably 7 or more to 15 or less, and even more suitably 12 or more to 14 or less.

Examples of the organic peroxide P include, for example: dialkyl peroxides, such as a dicumyl peroxide, 1,3-di(t-butylperoxy)diisopropylbenzene, 1,4-di(t-butylperoxy)diisopropylbenzene, t-butylcumyl peroxide, 2,5-dimethyl-2,5-di(t-butylperoxy)hexane, and 2,5-dimethyl-2,5-bis(t-butylperoxy)hexan-3; peroxyketals, such as 1,1-di(t-hexylperoxy)cyclohexane, 1,1-di(t-butylperoxy)cyclohexane, n-butyl-4,4-di(t-butylperoxy)valerate; and peroxyesters, such as 2,5-dimethyl-2,5-di(benzoyl peroxy)hexane, t-hexylperoxybenzoate, and t-butyl peroxybenzoate.

The organic peroxide P suitably includes one kind or two or more kinds of these substances, and suitably includes a dialkyl peroxide, more suitably includes a dialkyl peroxide having at least one aromatic ring in the molecule, even more suitably includes a dialkyl peroxide having one aromatic ring in the molecule, and much more suitably includes 1,3-di(t-butylperoxy)diisopropylbenzene, in order to obtain suitable sliding characteristics of the inner periphery.

The content p of the organic peroxide P in an uncrosslinked rubber composition before crosslinking of the rubber composition X is suitably 0.5 parts by mass or more to 5 parts by mass or less, more suitably 1 part by mass or more to 4 parts by mass or less, and even more suitably 2 parts by mass or more to 3 parts by mass or less, relative to 100 parts by mass of the rubber component in order to obtain suitable sliding characteristics of the inner periphery.

Examples of the co-crosslinking agent Q include, for example: a maleimide-based co-crosslinking agent, such as N,N'-m-phenylenebismaleimide, maleimide, and phenylmaleimide; a methacrylate-based co-crosslinking agent, such as trimethylolpropane trimethacrylate, ethylene glycol dimethacrylate, triethylene glycol dimethacrylate, tetraethylene glycol dimethacrylate, and polyethylene glycol dimethacrylate; an allyl-based co-crosslinking agent, such as triallyl cyanurate, diallyl fumarate, diallyl phthalate, tetraaryloxy ethane, triallyl isocyanurate, and trimethallyl isocyanurate; and 1,2-polybutadiene. The co-crosslinking agent Q suitably includes one kind or two or more kinds of these substances, and suitably includes a maleimide-based co-crosslinking agent, and more suitably includes N,N'-m-phenylenebismaleimide, in order to obtain suitable sliding characteristics of the inner periphery.

The content q of the co-crosslinking agent Q in the uncrosslinked rubber composition before crosslinking of the rubber composition X is suitably 0.5 parts by mass or more to 10 parts by mass or less, and more suitably 1 part by mass or more to 5 parts by mass or less, relative to 100 parts by mass of the rubber component in order to obtain suitable sliding characteristics of the inner periphery.

In the uncrosslinked rubber composition before crosslinking of the rubber composition X, the ratio (q/p) of the content q of the co-crosslinking agent Q to the content p of the organic peroxide P is suitably 0.8 or more to 3 or less, and more suitably 1 or more to 1.5 or less in order to obtain suitable sliding characteristics of the inner periphery. From a similar point of view, in a suitable embodiment, the content q of the co-crosslinking agent Q is greater than the content p of the organic peroxide P in the uncrosslinked rubber composition before crosslinking of the rubber composition X.

The content r of the sulfur R in the uncrosslinked rubber composition before crosslinking of the rubber composition X is 0.1 parts by mass or more to 1 part by mass or less, and suitably 0.2 parts by mass or more to 0.6 parts by mass or less, relative to 100 parts by mass of rubber component in order to obtain suitable sliding characteristics of the inner periphery.

In the uncrosslinked rubber composition before crosslinking of the rubber composition X, the ratio (r/p) of the content r of the sulfur R to the content p of the organic peroxide P is suitably 0.03 or more to 0.3 or less, more suitably 0.1 or more to 0.5 or less, and even more suitably 0.15 or more to 0.2 or less in order to obtain suitable sliding characteristics of the inner periphery. In the uncrosslinked rubber composition before crosslinking of the rubber composition X, the ratio (r/q) of the content r of the sulfur R to the content q of the co-crosslinking agent Q is suitably 0.04 or more to 0.2 or less, and more suitably 0.1 or more to 0.15 or less in order to obtain suitable sliding characteristics of the inner periphery.

The rubber composition X may further contain a processing aid, an antioxidant, a plasticizer, a vulcanization accelerator, a vulcanization accelerator aid, etc.

The hardness Hs of the rubber composition X is A60 or more to A95 or less in a suitable embodiment. The hardness Hs is measured with a type A durometer in accordance with JIS K6253-3: 2012.

The tensile strength Tb of the rubber composition X is 10 MPa or more in a suitable embodiment. The extension Eb of the rubber composition X is 200% or more in a suitable embodiment. The tensile stress S100 at 100% extension of the rubber composition X is 1 MPa or more to 10 MPa or less in a suitable embodiment. The tensile strength Tb, the extension Eb, and the tensile stress S100 at 100% extension are measured in accordance with JIS K6251: 2017.

The permanent compression set CS of the rubber composition X is suitably 20% or more to 40% or less, and more suitably 25% or more to 35% or less. The permanent compression set CS is measured in accordance with JIS K6262: 2013 at a test temperature of 120°C and test time of 72 hours.

The tear strength TS of the rubber composition X is 50 N/mm or more in a suitable embodiment. The tear strength TS is measured in accordance with JIS K6252-1: 2015.

Now, a method for forming the seal 10 according to the embodiment will be described.

First, a rubber component including an HNBR is placed in a rubber kneader, such as a Banbury mixer, and is masticated. Various kinds of compound ingredients including the fatty acid amide A, the carbon black B, the organic peroxide P, the co-crosslinking agent Q, and the sulfur R are added thereto and kneaded, thereby preparing an uncrosslinked rubber composition.

Then, a cavity formed in a mold to have a shape of the seal 10 is filled with a predetermined amount of the prepared uncrosslinked rubber composition. The mold is closed, and heated at a predetermined temperature (e.g., 165°C to 175°C) and pressurized at a predetermined pressure (e.g., 10 MPa to 20 MPa) for a predetermined period (e.g., five to fifteen minutes) to make the rubber component of the uncrosslinked rubber composition undergo primary crosslinking, thereby obtaining a primary crosslinked product.

The primary crosslinked product is removed from the mold, and is then subjected to annealing in which the primary crosslinked product is put into an oven, and heated at a temperature (e.g., 140°C to 160°C) lower than the temperature of the primary crosslinking for a longer period (e.g., three to five hours) than the period of the primary crosslinking to make the rubber component undergo secondary crosslinking. The seal 10 of the embodiment is obtained in this manner.

### [Examples]

### (Uncrosslinked Rubber Composition)

The following uncrosslinked rubber compositions of Example 1 and Comparative Examples 1 to 4 were prepared. The constituents of each of uncrosslinked rubber compositions will also be shown in Table 1.

### <Example 1>

An HNBR (bonded acrylonitrile amount: 36.2% by mass, iodine value: 11 mg/100 mg) rubber component was formed. Relative to 100 parts by mass of this rubber component, 4 parts by mass of erucamide as a fatty acid amide, 55 parts by mass of FEF (average particle diameter: 43 nm) as carbon black, 5.5 parts by mass of a processing aid, 3 parts by mass of an antioxidant, 5 parts by mass of a plasticizer, 5 parts by mass of a vulcanization accelerator aid, 2.4 parts by mass of 1,3-di(t-butylperoxy)diisopropylbenzene as an organic peroxide, 3 parts by mass of N,N'-m-phenylenebismaleimide as a co-crosslinking agent, and 0.4 parts by mass of sulfur were mixed and kneaded to obtain an uncrosslinked rubber composition, which was assumed to be Example 1.

### <Comparative Example 1>

An uncrosslinked rubber composition was prepared in the same manner as Example 1 except that erucamide as a fatty acid amide was not mixed and that the content of the processing aid was 1.5 parts by mass relative to 100 parts by mass of the rubber component. This uncrosslinked rubber composition was assumed to be Comparative Example 1.

### <Comparative Example 2>

An uncrosslinked rubber composition was prepared in the same manner as Example 1 except that SRF (average particle diameter: 66 nm) as carbon black was mixed instead of FEF as carbon black. This uncrosslinked rubber composition was assumed to be Comparative Example 2.

### <Comparative Example 3>

An uncrosslinked rubber composition was prepared in the same manner as Example 1 except that N,N'-m-phenylenebismaleimide as a co-crosslinking agent was not mixed. This uncrosslinked rubber composition was assumed to be Comparative Example 3.

### <Comparative Example 4>

An uncrosslinked rubber composition was prepared in the same manner as Example 1 except that sulfur was not mixed. This uncrosslinked rubber composition was assumed to be Comparative Example 4.

**[Table 1]**

| | Example 1 | Comparative Example | | | |
|---|---|---|---|---|---|
| | | 1 | 2 | 3 | 4 |
| HNBR | 100 | 100 | 100 | 100 | 100 |
| Fatty Acid Amide: Erucamide a | 4 | | 4 | 4 | 4 |
| Carbon Black: FEF b | 55 | 55 | | 55 | 55 |
| Carbon Black: SRF b | | | 55 | | |
| Processing Aid | 5.5 | 1.5 | 5.5 | 5.5 | 5.5 |
| Antioxidant | 3 | 3 | 3 | 3 | 3 |
| Plasticizer | 5 | 5 | 5 | 5 | 5 |
| Vulcanization Accelerator Aid | 5 | 5 | 5 | 5 | 5 |
| Organic Peroxide 1,3-di(t-butylperoxy) diisopropylbenzene p | 2.4 | 2.4 | 2.4 | 2.4 | 2.4 |
| Co-Crosslinking Agent: N,N'-m-phenylene bismaleimide q | 3 | 3 | 3 | | 3 |
| Sulfur r | 0.4 | 0.4 | 0.4 | 0.4 | |
| b/a | 13.75 | - | 13.75 | 13.75 | 13.75 |
| q/p | 1.25 | 1.25 | 1.25 | - | 1.25 |
| r/p | 0.167 | 0.167 | 0.167 | - | - |
| r/q | 0.133 | 0.133 | 0.133 | - | - |
| Hardness Hs | 77 | 77 | 77 | 76 | 80 |
| Tensile Strength Tb (Mpa) | 27.4 | 27.4 | 25.6 | 33.1 | 26.6 |
| Extension Eb (%) | 486 | 485 | 440 | 605 | 360 |
| Tensile Stress at 100% extension S100 (Mpa) | 5.10 | 5.10 | 6.58 | 2.50 | 7.30 |
| Tear Strength TS (N/mm) | 61.70 | 61.70 | 56.03 | - | - |
| Permanent Compression Set | 32 | 32 | 37 | 63 | 11 |

| CS (%) | | | | | |
|---|---|---|---|---|---|
| Abrasion Amount (mm) | 0.07 | 0.13 | 0.24 | | |
| Specific Gravity | 1.18 | 1.18 | 1.18 | 1.18 | 1.18 |

### (Test Method and Test Result)

Test specimens of the respective rubber compositions were formed from the uncrosslinked rubber compositions described above. The following tests were performed by using the test specimens. The results are shown in Table 1.

### <Hardness>

Predetermined test specimens were formed from the uncrosslinked rubber compositions of Example 1 and Comparative Examples 1 to 4. The hardness Hs of each test specimen was measured using a type A durometer in accordance with JIS K6253-3: 2012. The temperature and time conditions for the primary crosslinking at the time of preparing the test specimens were 170°C and 10 minutes, whereas the temperature and time conditions for the secondary crosslinking were 150°C and 4 hours (the same applies hereinafter).

### <Tensile Property>

Predetermined test specimens were formed from the uncrosslinked rubber compositions of Example 1 and Comparative Examples 1 to 4. The tensile strength Tb, the extension Eb, and the tensile stress S100 at 100% extension of each test specimen were measured in accordance with JIS K6251: 2017.

### <Tear Strength>

Predetermined test specimens with a cut were formed from the uncrosslinked rubber compositions of Example 1 and Comparative Examples 1 and 2. The tear strength TS of each test specimen was measured by a test method B in accordance with JIS K6252-1: 2015.

### <Permanent Compression Set>

Predetermined test specimens were formed from the uncrosslinked rubber compositions of Example 1 and Comparative Examples 1 to 4. The permanent compression set CS of each test specimen was measured in accordance with JIS K6262: 2013. The test temperature and time were set to be 120°C and 72 hours.

### <Wear Resistance>

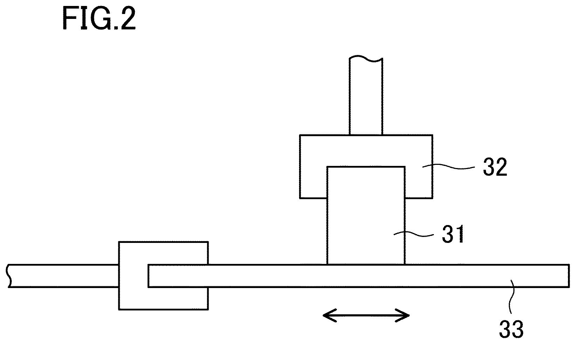

Columnar test specimens having a diameter of 6.3 mm and a height of 8.0 mm were formed from the uncrosslinked rubber compositions of Example 1 and Comparative Examples 1 and 2. As illustrated in FIG. 2, a test specimen 31 was fixed by a fixture 32 and pressed against a metal plate 33. In this state, the metal plate 33 was caused to reciprocate such that a bottom surface of the test specimen 31 slid with the metal plate 33. The material for the metal plate 33 was SS400 with a surface roughness Ry of 3.2 and the finish direction orthogonal to the sliding direction. The pressing force of the test specimen 31 against the metal plate 33 was set to be 0.1 MPa. The number of reciprocating movements of the metal plate 33 per minute was set to be 60 times/minute. The stroke of the reciprocating movements of the metal plate 33 was set to be 10 mm. The reciprocating movement of the metal plate 33 was repeated hundred thousand times. A mass reduction amount of the test specimen 31 before and after the test was divided by the specific gravity and bottom surface area of the test specimen 31 to obtain an abrasion amount (mm).

## Claims

1. A seal having a ring shape and made of a rubber composition,
the rubber composition containing: a rubber component containing a hydrogenated nitrile-butadiene rubber as a main part; a fatty acid amide; and carbon black having an average particle diameter of 60 nm or less, the rubber component being crosslinked by using an organic peroxide, a co-crosslinking agent, and sulfur, said sulfur being present in 0.1 parts to 1 part by mass relative to 100 parts of said rubber component.

2. The seal of claim 1, wherein
the hydrogenated nitrile-butadiene rubber has a bonded acrylonitrile amount of 18% by mass or more to 52% by mass or less.

3. The seal of claim 1 or 2, wherein
the hydrogenated nitrile-butadiene rubber has an iodine value of 8 mg/100 mg or more to 28 mg/100 mg or less.

4. The seal of any one of claims 1 to 3, wherein
the fatty acid amide suitably includes an unsaturated fatty acid amide, more suitably includes an ω-9 fatty acid amide, and even more suitably includes erucamide.

5. The seal of any one of claims 1 to 4, wherein
a content of the fatty acid amide in the rubber composition is suitably 1 part by mass or more to 20 parts by mass or less, and more suitably 2 parts by mass or more to 6 parts by mass or less, relative to 100 parts by mass of the rubber component.

6. The seal of any one of claims 1 to 5, wherein
the carbon black includes FEF.

7. The seal of any one of claims 1 to 6, wherein
the carbon black has an average particle diameter of suitably 20 nm or more to 60 nm or less, more suitably 20 nm or more to 55 nm or less, even more suitably 25 nm or more to 50 nm or less, and much more suitably 40 nm or more to 45 nm or less.

8. The seal of any one of claims 1 to 7, wherein
a content of the carbon black in the rubber composition is suitably 10 parts by mass or more to 80 parts by mass or less, more suitably 35 parts by mass or more to 60 parts by mass or less, and even more suitably 50 parts by mass or more to 58 parts by mass or less, relative to 100 parts by mass of the rubber component.

9. The seal of any one of claims 1 to 8, wherein
a ratio of the content of the carbon black to the content of the fatty acid amide in the rubber composition is suitably 5 or more to 20 or less, more suitably 7 or more to 15 or less, and even more suitably 12 or more to 14 or less.

10. The seal of any one of claims 1 to 9, wherein
the organic peroxide suitably includes a dialkyl peroxide, more suitably includes a dialkyl peroxide having at least one aromatic ring in a molecule, even more suitably includes a dialkyl peroxide having one aromatic ring in the molecule, and much more suitably includes 1,3-di(t-butylperoxy)diisopropylbenzene.

11. The seal of any one of claims 1 to 10, wherein
the co-crosslinking agent suitably includes maleimide-based co-crosslinking agent, and more suitably includes N,N'-m-phenylenebismaleimide.

12. The seal of any one of claims 1 to 11, wherein
in an uncrosslinked rubber composition before crosslinking of the rubber composition, a ratio of a content of the co-crosslinking agent to a content of the organic peroxide is suitably 0.8 or more to 3 or less, and more suitably 1 or more and 1.5 or less.

13. The seal of any one of claims 1 to 12, wherein
in the uncrosslinked rubber composition before crosslinking of the rubber composition, the content of the co-crosslinking agent is greater than the content of the organic peroxide.

14. The seal of any one of claims 1 to 13, wherein
in the uncrosslinked rubber composition before crosslinking of the rubber composition, a ratio of a content of the sulfur to the content of the organic peroxide is suitably 0.03 or more to 0.3 or less, more suitably 0.1 or more to 0.5 or less, and even more suitably 0.15 or more to 0.2 or less.

15. The seal of any one of claims 1 to 14, wherein
in the uncrosslinked rubber composition before crosslinking of the rubber composition, a ratio of the content of the sulfur to the content of the co-crosslinking agent is suitably 0.04 or more to 0.2 or less, and more suitably 0.1 or more to 0.15 or less.

## Patentansprüche

1. Dichtung, die eine Ringform aufweist und aus einer Gummizusammensetzung hergestellt ist,
wobei die Gummizusammensetzung Folgendes enthält: Eine Gummikomponente, die einen hydrierten Nitril-Butadien-Gummi als einen Hauptteil enthält; ein Fettsäureamid; und Ruß mit einem durchschnittlichen Partikeldurchmesser von 60 nm oder weniger, wobei die Gummikomponente unter Verwendung eines organischen Peroxids, eines Co-Vernetzungsmittels und Schwefel vernetzt ist, wobei der Schwefel in 0,1 Teilen bis 1 Teil pro Masse, bezogen auf 100 Teile der Gummikomponente, vorhanden ist.

2. Dichtung nach Anspruch 1, wobei
der hydrierte Nitril-Butadien-Gummi eine Menge an gebundenem Acrylnitril von 18 % pro Masse oder mehr bis 52 % pro Masse oder weniger aufweist.

3. Dichtung nach Anspruch 1 oder 2, wobei
der hydrierte Nitril-Butadien-Gummi einen Jodwert von 8 mg/100 mg oder mehr bis 28 mg/100 mg oder weniger aufweist.

4. Dichtung nach einem der Ansprüche 1 bis 3, wobei
das Fettsäureamid geeignet ein ungesättigtes Fettsäureamid einschließt, noch geeigneter ein ω-9-Fettsäureamid einschließt und noch geeigneter Erucamid einschließt.

5. Dichtung nach einem der Ansprüche 1 bis 4, wobei
der Gehalt des Fettsäureamids in der Gummizusammensetzung geeigneterweise 1 Teil pro Masse oder mehr bis 20 Teile pro Masse oder weniger und noch geeigneter 2 Teile pro Masse oder mehr bis 6 Teile pro Masse oder weniger beträgt, bezogen auf 100 Teile pro Masse der Gummikomponente.

6. Dichtung nach einem der Ansprüche 1 bis 5, wobei der Ruß FEF einschließt.

7. Dichtung nach einem der Ansprüche 1 bis 6, wobei
der Ruß einen durchschnittlichen Partikeldurchmesser von geeigneterweise 20 nm oder mehr bis 60 nm oder weniger, besser geeignet 20 nm oder mehr bis 55 nm oder weniger, noch besser geeignet 25 nm oder mehr bis 50 nm oder weniger und viel besser geeignet 40 nm oder mehr bis 45 nm oder weniger aufweist.

8. Dichtung nach einem der Ansprüche 1 bis 7, wobei
ein Gehalt des Rußes in der Gummizusammensetzung geeigneterweise 10 Teile pro Masse oder mehr bis 80 Teile pro Masse oder weniger, geeigneter 35 Teile pro Masse oder mehr bis 60 Teile pro Masse oder weniger, und noch geeigneter 50 Teile pro Masse oder mehr bis 58 Teile pro Masse oder weniger, bezogen auf 100 Teile pro Masse der Gummikomponente, beträgt.

9. Dichtung nach einem der Ansprüche 1 bis 8, wobei
das Verhältnis des Gehalts an Ruß zum Gehalt an Fettsäureamid in der Gummizusammensetzung geeigneterweise 5 oder mehr bis 20 oder weniger, geeigneter 7 oder mehr bis 15 oder weniger und noch geeigneter 12 oder mehr bis 14 oder weniger beträgt.

10. Dichtung nach einem der Ansprüche 1 bis 9, wobei
das organische Peroxid geeigneterweise ein Dialkylperoxid einschließt, geeigneter ein Dialkylperoxid mit mindestens einem aromatischen Ring in einem Molekül einschließt, noch geeigneter ein Dialkylperoxid mit einem aromatischen Ring in dem Molekül einschließt und noch viel geeigneter 1,3-di(t-butylperoxy)diisopropylbenzol einschließt.

11. Dichtung nach einem der Ansprüche 1 bis 10, wobei
das Co-Vernetzungsmittel geeigneterweise ein auf Maleimid basierendes Co-Vernetzungsmittel einschließt, und noch geeigneter N,N'-m-Phenylenbismaleimid einschließt.

12. Dichtung nach einem der Ansprüche 1 bis 11, wobei
in einer unvernetzten Gummizusammensetzung vor der Vernetzung der Gummizusammensetzung das Verhältnis des Gehalts des Co-Vernetzungsmittels zum Gehalt des organischen Peroxids geeigneterweise 0,8 oder mehr bis 3 oder weniger und noch geeigneter 1 oder mehr und 1,5 oder weniger beträgt.

13. Dichtung nach einem der Ansprüche 1 bis 12, wobei
in der unvernetzten Gummizusammensetzung vor der Vernetzung der Gummizusammensetzung der Gehalt an dem Co-Vernetzungsmittel größer ist als der Gehalt an dem organischen Peroxid.

14. Dichtung nach einem der Ansprüche 1 bis 13, wobei
in der unvernetzten Gummizusammensetzung vor der Vernetzung der Gummizusammensetzung das Verhältnis des Schwefelgehalts zum Gehalt des organischen Peroxids geeigneterweise 0,03 oder mehr bis 0,3 oder weniger, geeigneter 0,1 oder mehr bis 0,5 oder weniger und noch geeigneter 0,15 oder mehr bis 0,2 oder weniger beträgt.

15. Dichtung nach einem der Ansprüche 1 bis 14, wobei
in der unvernetzten Gummizusammensetzung vor der Vernetzung der Gummizusammensetzung ein Verhältnis des Schwefelgehalts zum Gehalt des Co-Vernetzungsmittels von geeigneterweise 0,04 oder mehr bis 0,2 oder weniger und noch geeigneter von 0,1 oder mehr bis 0,15 oder weniger aufweist.

## Revendications

1. Joint d'étanchéité ayant une forme d'anneau et réalisé en une composition de caoutchouc,
la composition de caoutchouc contenant : un composant de caoutchouc contenant un caoutchouc nitrile-butadiène hydrogéné en tant que partie principale ; un amide d'acide gras ; et du noir de carbone ayant un diamètre moyen de particule inférieur ou égal à 60 nm, le composant de caoutchouc étant réticulé à l'aide d'un peroxyde organique, d'un agent de co-réticulation et de soufre, ledit soufre étant présent en 0,1 partie à 1 partie en masse par rapport à 100 parties dudit composant de caoutchouc.

2. Joint d'étanchéité de la revendication 1, dans lequel
le caoutchouc nitrile-butadiène hydrogéné a une quantité d'acrylonitrile lié de 18% en masse ou plus à 52% en masse ou moins.

3. Joint d'étanchéité de la revendication 1 ou 2, dans lequel
le caoutchouc nitrile-butadiène hydrogéné a un indice d'iode de 8 mg/100 mg ou plus à 28 mg/100 mg ou moins.

4. Joint d'étanchéité de l'une quelconque des revendications 1 à 3, dans lequel
l'amide d'acide gras comprend de manière appropriée un amide d'acide gras insaturé, comprend d'une manière plus appropriée un amide d'acide gras ω-9 et comprend d'une manière encore plus appropriée de l'érucamide.

5. Joint d'étanchéité de l'une quelconque des revendications 1 à 4, dans lequel
une teneur en amide d'acide gras dans la composition de caoutchouc est de manière appropriée de 1 partie en masse ou plus à 20 parties en masse ou moins et d'une manière plus appropriée de 2 parties en masse ou plus à 6 parties en masse ou moins, par rapport à 100 parties en masse du composant de caoutchouc.

6. Joint d'étanchéité de l'une quelconque des revendications 1 à 5, dans lequel
le noir de carbone comprend FEF.

7. Joint d'étanchéité de l'une quelconque des revendications 1 à 6, dans lequel
le noir de carbone a un diamètre moyen de particule de manière appropriée de 20 nm ou plus à 60 nm ou moins, d'une manière plus appropriée de 20 nm ou plus à 55 nm ou moins, d'une manière encore plus appropriée de 25 nm ou plus à 50 nm ou moins, et d'une manière beaucoup plus appropriée de 40 nm ou plus à 45 nm ou moins.

8. Joint d'étanchéité de l'une quelconque des revendications 1 à 7, dans lequel
une teneur en noir de carbone dans la composition de caoutchouc est de manière appropriée de 10 parties en masse ou plus à 80 parties en masse ou moins, d'une manière plus appropriée de 35 parties en masse ou plus à 60 parties en masse ou moins et d'une manière encore plus appropriée de 50 parties en masse ou plus à 58 parties en masse ou moins, par rapport à 100 parties en masse du composant de caoutchouc.

9. Joint d'étanchéité de l'une quelconque des revendications 1 à 8, dans lequel
un rapport de la teneur en noir de carbone sur la teneur en amide d'acide gras dans composition de caoutchouc est de manière appropriée de 5 ou plus à 20 ou moins, d'une manière plus appropriée de 7 ou plus à 15 ou moins et d'une manière encore plus appropriée de 12 ou plus à 14 ou moins.

10. Joint d'étanchéité de l'une quelconque des revendications 1 à 9, dans lequel
le peroxyde organique comprend de manière appropriée un peroxyde de dialkyle, comprend d'une manière plus appropriée un peroxyde de dialkyle ayant au moins un noyau aromatique dans une molécule, comprend d'une manière encore plus appropriée un peroxyde de dialkyle ayant un noyau aromatique dans la molécule et comprend d'une manière beaucoup plus appropriée du 1,3-di(t-butylperoxy)diisopropylbenzène.

11. Joint d'étanchéité de l'une quelconque des revendications 1 à 10, dans lequel
l'agent de co-réticulation comprend de manière appropriée un agent de co-réticulation à base de maléimide et comprend d'une manière plus appropriée du N,N'-m-phénylènebismaléimide.

12. Joint d'étanchéité de l'une quelconque des revendications 1 à 11, dans lequel
dans une composition de caoutchouc non réticulée, avant la réticulation de la composition de caoutchouc, un rapport d'une teneur en agent de co-réticulation sur une teneur en peroxyde organique est de manière appropriée de 0,8 ou plus à 3 ou moins et d'une manière plus appropriée de 1 ou plus et de 1,5 ou moins.

13. Joint d'étanchéité de l'une quelconque des revendications 1 à 12, dans lequel
dans la composition de caoutchouc non réticulée avant la réticulation de la composition de caoutchouc, la teneur en agent de co-réticulation est supérieure à la teneur en peroxyde organique.

14. Joint d'étanchéité de l'une quelconque des revendications 1 à 13, dans lequel
dans la composition de caoutchouc non réticulée avant la réticulation de la composition de caoutchouc, un rapport d'une teneur en soufre sur la teneur en peroxyde organique est de manière appropriée de 0,03 ou plus à 0,3 ou moins, d'une manière plus appropriée de 0,1 ou plus à 0,5 ou moins et d'une manière encore plus appropriée de 0,15 ou plus à 0,2 ou moins.

15. Joint d'étanchéité de l'une quelconque des revendications 1 à 14, dans lequel
dans la composition de caoutchouc non réticulée avant la réticulation de la composition de caoutchouc, un rapport de la teneur en soufre sur la teneur en agent de co-réticulation est de manière appropriée de 0,04 ou plus à 0,2 ou moins et d'une manière plus appropriée de 0,1 ou plus à 0,15 ou moins.
